# EUROPEAN PATENT APPLICATION

(11) **EP 3 793 298 A1**
(43) Date of publication of application: **17.03.2021**
(21) Application number: 18917630.8
(22) Date of filing: 10.05.2018
(51) Int. Cl.: H04W 72/12, H04W 72/04

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); ZHANG, Xu, Beijing 100190 (CN); HOU, Xiaolin, Beijing 100190 (CN)
(74) Representative: Hoffmann Eitle
(86) International application number: PCT/JP2018/018206
(87) International publication number: WO 2019/215889

(57) **Abstract**

In order to appropriately perform data transmission or reception even in a case that allocation of data to non-continuous time domain resources is supported, an aspect of a user terminal according to the present disclosure includes a receiving section that receives a physical shared channel scheduled in units of symbol or in units of symbol group, and a control section that controls reception of the physical shared channel, based on an allocation type for a time direction of the physical shared channel notified by use of at least one of downlink control information and higher layer signaling.

## Description

### Technical Field

The present invention relates to a user terminal and a radio communication method in next-generation mobile communication systems.

### Background Art

In the UMTS (Universal Mobile Telecommunications System) network, the specifications of Long Term Evolution (LTE) have been drafted for the purpose of further increasing high speed data rates, providing lower latency and so on (see Non-Patent Literature 1). For the purpose of further high capacity, advancement of LTE (LTE Rel. 8, Rel. 9), and so on, the specifications of LTE-A (LTE-Advanced, LTE Rel. 10, Rel. 11, Rel. 12, Rel. 13) have been drafted.

Successor systems of LTE (referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.

In the existing LTE systems (for example, LTE Rel. 8 to Rel. 13), communication of a downlink (DL) and/or an uplink (UL) is performed by using a subframe of 1 ms (also referred to as a transmission time interval (TTI) or the like). The subframe is a transmission time unit of one data packet coded by channel coding, and is a processing unit of scheduling, link adaptation, retransmission control (HARQ (Hybrid Automatic Repeat reQuest)), and so on.

A radio base station (for example, an eNB (eNode B)) controls allocation (scheduling) of data for a user terminal (UE (User Equipment)), and notifies the UE of a scheduling indication of data by using downlink control information (DCI).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For the future radio communication systems (for example, NR), flexible control of allocation of data (for example, physical shared channel, or the like) is under study. For example, control of allocation of data per one or more symbols (for example, also referred to as mini-slot(s)) included in a slot is also under study. Moreover, it is also assumed that a physical shared channel is allocated to non-continuous time domain resources to control transmission.

On the other hand, study as to how to control transmission of the data (for example, resource allocation in the time domain, or the like) in a case that allocation to a non-continuous time domain resources is supported is not yet adequately developed. In a case that the resource allocation in the time domain or the like cannot be appropriately controlled, throughput reduction, communication quality deterioration, or the like may occur.

In view of this, the present disclosure has one object to provide a user terminal and a radio communication method capable of appropriate data transmission or reception even in a case that allocation of data to non-continuous time domain resources is supported.

### Solution to Problem

A user terminal according to an aspect of the present disclosure includes a receiving section that receives a physical shared channel scheduled in units of symbol or in units of symbol group; and a control section that controls reception of the physical shared channel, based on an allocation type for a time direction of the physical shared channel notified by use of at least one of downlink control information and higher layer signaling.

### Advantageous Effects of Invention

According to the present invention, data transmission or reception can be appropriately performed even in a case that allocation of data to a non-continuous time domain resources is supported.

### Brief Description of Drawings

FIG. 1A and FIG. 1B are each a diagram to describe a PUSCH mapping type;
FIGS. 2A and 2B are diagrams to show examples of allocation of data to non-continuous time domain resources;
FIG. 3 is a diagram to show an example of a case of using a continuous resource allocation type and a non-continuous resource allocation type;
FIGS. 4A to 4C are diagrams to show examples of a case of using a non-continuous resource allocation type;
FIG. 5 is a diagram to show an example of a schematic structure of a radio communication system according to one embodiment of the present invention;
FIG. 6 is a diagram to show an example of an overall structure of a radio base station according to one embodiment of the present invention;
FIG. 7 is a diagram to show an example of a functional structure of the radio base station according to one embodiment of the present invention;
FIG. 8 is a diagram to show an example of an overall structure of a user terminal according to one embodiment of the present invention;
FIG. 9 is a diagram to show an example of a functional structure of the user terminal according to one embodiment of the present invention; and
FIG. 10 is a diagram to show an example of a hardware structure of the radio base station and the user terminal according to one embodiment of the present invention.

### Description of Embodiments

For the future radio communication systems (hereinafter, also referred to as NR), a study is underway to perform transmission of data and so on by using scheduling in units of mini-slot (for example, in units of symbol) without limitation to units of slot.

The slot is one of basic transmission units, and one slot is constituted with a certain number of symbols. For example, in a normal CP (CP), a slot period is constituted with a first number of symbols (for example, 14 symbols), whereas in an extended CP, a slot period is constituted with a second number of symbols (for example, 12 symbols).

The mini-slot corresponds to a period constituted with the number of symbols having a certain value (for example, 14 symbols (or 12 symbols)) or less. As an example, in DL transmission (for example, PDSCH transmission), the mini-slot may be constituted with a certain number (for example, 2, 4, or 7 symbols).

### <Data Mapping Type>

As allocation of data (for example, physical shared channel), different resource allocation types (for example, type A and type B) may be employed. Hereinafter, mapping types employed for a downlink shared channel (PDSCH) and an uplink shared channel (PUSCH) will be described.

A case where mapping type A is employed in DL (for example, PDSCH transmission) is assumed. In this case, the PDSCH start position in a slot is selected from preconfigured candidate symbols, and the number of symbols allocated for the PDSCH (a PDSCH length) is selected from a range from a certain value (X) to 14. For example, a candidate symbol to be a candidate for the start position corresponds to a certain symbol index (for example, #0, #1, #2, or #3) within a slot. X may be 3, for example.

A case where mapping type B is employed in DL (for example, PDSCH transmission) is assumed. In this case, the number of symbols allocated for the PDSCH (a PDSCH length) is selected from the number of preconfigured candidate symbols, and the PDSCH start position in a slot is configured to any position (symbol) in a slot. For example, the number of candidate symbols of the PDSCH length corresponds to a certain number (2, 4, or 7 symbols). In other words, the PDSCH start position is flexibly configured.

A base station may configure, for a UE, indication information of a start symbol (S) and data length (L) of the PDSCH (SLIV (Start and length indicator value)), combination candidates of the PDSCH mapping type, and a slot offset. The slot offset corresponds offsets of a slot in which DCI is transmitted and a slot for the PDSCH scheduled by way of the DCI.

For example, the base station may configure, for the UE, a table in which a plurality of combination candidates of slot offsets, SLIVs, and PDSCH mapping type are defined (also referred to as a SLIV table or a PUSCH symbol allocation table).

The SLIV table is defined with N rows. In each row, a combination candidate index, and a combination candidate of the slot offset, the start symbol (S) and data length (L) of the PDSCH, and the mapping type which are specified by the index are defined. In a case that the base station configures the table through higher layer signaling, the base station may notify the UE of a row number of the SLIV table having N rows using the DCI for scheduling the PDSCH.

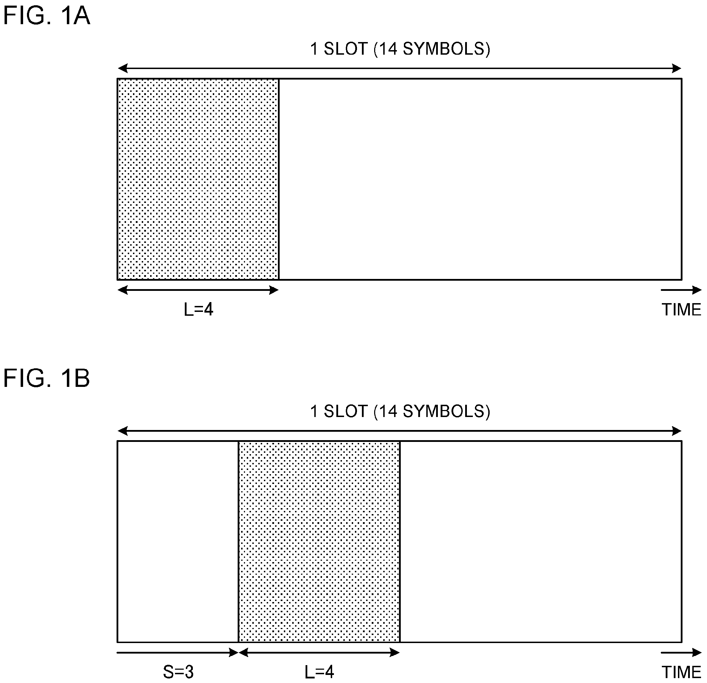

A case where mapping type A is employed in UL (for example, PUSCH transmission) is assumed. In this case, the PUSCH start position in a slot is selected from preconfigured fixed symbols (for example, symbol index #0), and the number of symbols allocated for the PUSCH (a PUSCH length) is selected from a range from a certain value (Y) to 14 (see FIG. 1A).

FIG. 1A shows a case where the PUSCH is allocated from the first symbol to the fourth symbol (symbols #0 to #3) of a slot. In this manner, in PUSCH mapping type A, the PUSCH start position is fixed, but the PUSCH length (here, L = 4) is flexibly configured. Note that Y may be a value greater than 1 (Y > 1), or may be equal to or greater than 1. For example, Y may be 4.

In type A, at least one of demodulation reference signals (DM-RSs) used for demodulation of the PUSCH may be mapped to a fixed symbol (for example, symbol #0 and so on). In type A, since the PUSCH is started from a fixed position, the position of at least one DM-RS may also be determined based on the PUSCH start position.

A case where mapping type B is employed in UL (for example, PUSCH transmission) is assumed. In this case, the number of symbols allocated for the PUSCH (a PUSCH length) is selected from the number of preconfigured candidate symbols (1 to 14 symbols), and the PUSCH start position in a slot is configured to any position (symbol) in a slot (see FIG. 1B).

FIG. 1B shows a case where the PUSCH start symbol is a certain symbol (here, symbol #3 (S = 3)), and the number of symbols consecutively allocated from the start symbol is 4 (L = 4). In this manner, in PUSCH mapping type B, the PUSCH start symbol (S) and the number (L) of consecutive symbols from the start symbol are notified to a UE from a base station. The number (L) of consecutive symbols from the start symbol is also referred to as a PUSCH length. In this manner, in PUSCH mapping type B, the PUSCH start position is flexibly configured.

In type B, at least one of DMRSs used for demodulation of the PUSCH may be configured based on an allocation position of the PUSCH in a slot. The DMRS may be inserted in different positions, depending on a mapping type.

A base station may configure, for a UE, indication information of a start symbol (S) and data length (L) of the PUSCH (SLIV (Start and length indicator value)), combination candidates of the PUSCH mapping type, and a slot offset. The slot offset corresponds offsets of a slot in which DCI is transmitted and a slot for the PUSCH scheduled by way of the DCI. Note that the SLIV table may be configured for the UE in the same way as the case of the PDSCH.

In Rel. 15, time-domain resource allocation is continuously configured to data in certain units (for example, per transport block (TB)) at a symbol level (for example, SLIV-based). Furthermore, data corresponding to one TB is allocated in such a way not to cross a slot boundary. Specifically, the data is allocated to continuous symbols in one slot.

On the other hand, in a case that scheduling flexibility or resource utilization efficiency improvement is taken into consideration, it is also assumed that non-continuous time domain resource allocation to one TB is supported. Alternatively, it is also assumed that allocation in which the data corresponding to one TB crosses the slot boundary is supported.

For example, assume a case of transmission in units of code block group (CBG), or a case that eMBB transmission and URLLC transmission are allowed to overlap each other. The CBG corresponds to a unit obtained by grouping code blocks (CB) each of which is a unit smaller than a transport block (TB). The code block (CB) is a unit of information bits capable of being input to a coder (for example, turbo coder). In a case that a TBS is equal to or smaller than a coder acceptable size (maximum coding size), the TB may be referred as the CB. In a case that the TBS exceeds the coder acceptable size, the TB may be divided into a plurality of segments and each segment may be referred to as the CB. A segment group obtained by grouping a plurality of segments (CB) less than the number of segments (CB) per one TB may be referred to as the code block group.

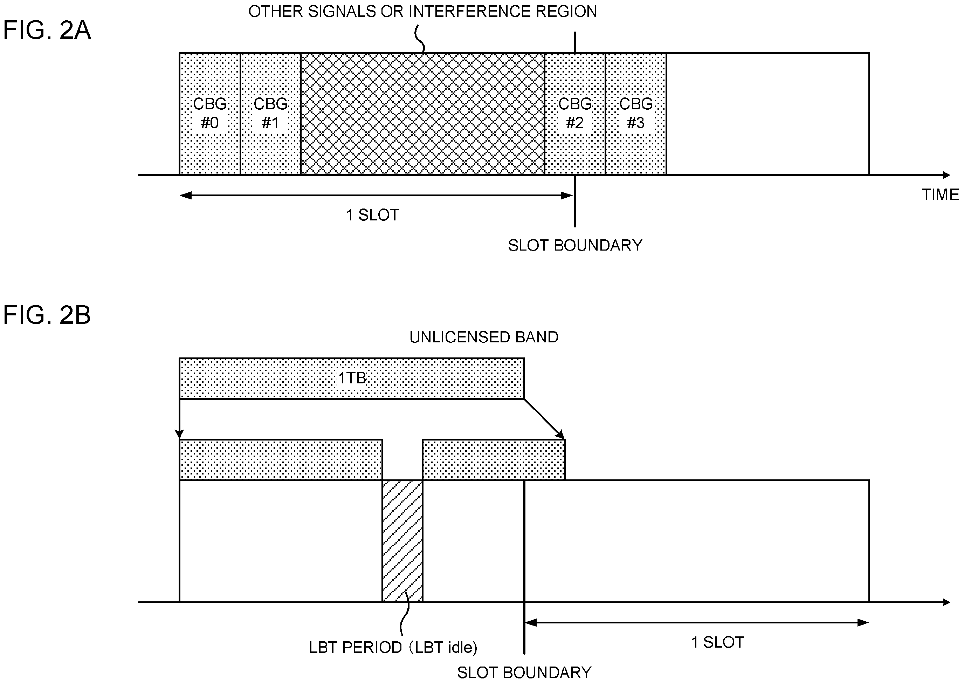

For example, in a case that one TB is divided into CBGs #0 to #3 and transmitted, scheduling can be flexibly controlled by allowing allocation of CBGs to the non-continuous time resources and allocation crossing the slot boundary (see FIG. 2A).

In an unlicensed band, allocation of one TB to the non-continuous time resources and allocation crossing the slot boundary may be allowed (see FIG. 2B). This also allows one TB to be transmitted using a time resource (non-continuous time domain resource) before and after a period requiring LBT (listening period).

In this manner, by supporting at least one of the non-continuous time domain resource allocation and the allocation crossing the slot boundary in the data transmission, the scheduling can be flexibly controlled and the resource usage efficiency can be improved.

On the other hand, study as to how to control transmission of the data (for example, resource allocation in the time domain, or the like) in a case that allocation to a non-continuous time domain resources is supported is not yet adequately developed. In a case that the resource allocation in the time domain or the like cannot be appropriately controlled, throughput reduction, communication quality deterioration, or the like may occur.

The inventors of the present invention focused on an issue that the allocation of data to the non-continuous time domain resources is supported in the future radio communication systems, in addition to the allocation of data to the continuous time resources, and come up with the idea of notifying the UE of information on allocation in a time direction to control the allocation of data.

Embodiments according to the present invention will be described in detail with reference to the drawings as follows. A radio communication method according to each embodiment may be employed independently or may be employed in combination.

Note that, in the following embodiments, a prefix "NR-" indicating the meaning of "for NR" may be added to any signal and channel, so that the signal and channel may be interpreted as such meaning. The present embodiment can be employed for both DL data (for example, PDSCH) and UL data (for example, PUSCH). The following description is made for the data, but may be employed for other signals or channels likewise.

### (First Aspect)

In a first aspect, by use of at least one of higher layer signaling and downlink control information, a physical shared channel resource allocation type is notified to the UE. Note that in the following description, the physical shared channel (or, the data) may be interpreted as the PDSCH or the PUSCH.

The base station may configure any of a plurality of time domain resource allocation types for the UE by use of the higher layer signaling. The plurality of time domain resource allocation types may be those described below, (1) to (3). (1) Only continuous resource allocation type, (2) only non-continuous resource allocation type, and (3) both continuous resource allocation allocation and non-continuous resource allocation type.

In a case that the resource allocation type in (1) is configured by the base station, the UE may assume that data is allocated to the continuous resources and that the non-continuous resource allocation type is not employed to control transmitting/receiving processes. In a case that the resource allocation type in (2) is configured by the base station, the UE may assume that data is allocated to the non-continuous resources and that the continuous resource allocation type is not employed to control the transmitting/receiving processes.

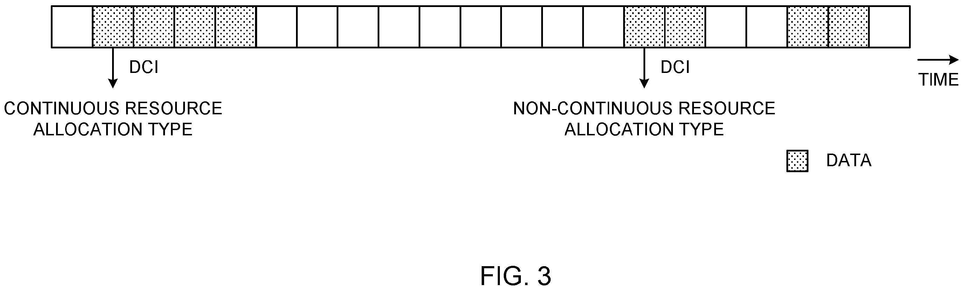

In a case that the resource allocation type in (3) is configured by the base station, the UE may assume that both the continuous resource allocation type and the non-continuous resource allocation type may be employed to control the transmitting/receiving processes. The UE may determine the resource allocation type employed for each data transmission (which of the continuous resource allocation type or the non-continuous resource allocation type is employed) based on the DCI. For example, the base station may include information on the resource allocation type for data in certain DCI (for example, DCI for scheduling the data) (see FIG. 3).

In FIG. 3, in a case that the continuous resource allocation type is indicated by way of the certain DCI, the UE assumes that data is scheduled in the continuous resources to perform at least one of a PDSCH receiving process and a PUSCH transmitting process. In a case that the non-continuous resource allocation type is indicated by way of the certain DCI, the UE assumes that data is scheduled in the non-continuous resources to perform at least one of the PDSCH receiving process and the PUSCH transmitting process.

One or both of a granularity of the time domain resource for the continuous resource allocation type (for example, allocation unit) and a granularity of the time resource for the non-continuous resource allocation type may be defined. For example, a granularity (X) of the time domain resource may be defined by a symbol level (for example, X = 1). Alternatively, the granularity of the time domain resource may be defined by a symbol group level including X (for example, 1 < X ≤ 14) continuous symbols.

The granularity of the time domain resource allocation may be configured through higher layer signaling, or may be defined in a specification in advance. The granularity of the time domain resource for the continuous resource allocation type and the granularity of the time domain resource for the non-continuous resource allocation type may be configured to be identical or to be different from each other. The granularity of the time domain resource may be defined to be jointed with or separate from the a PRB group in the frequency domain.

The configuration of the time domain resource allocation type may be configured only for the DL transmission (for example, PDSCH transmission and reception), or for the DL transmission and the UL transmission (for example, PUSCH transmission and reception). Note that in a case that the time domain resource allocation type is configured for the DL transmission and the UL transmission, the same type may be always configured, or the allocation types different for the DL transmission and the UL transmission may be configured separately.

Note that in a case that the non-continuous resource allocation type is used in receiving the DL transmission, when a time interval length in which allocation is not made exceeds a certain value, the user terminal may assume that different precoding is performed or different channel states are present between different resources to perform the receiving process. Alternatively, in a case that the non-continuous resource allocation type is used in transmitting the UL transmission, when a time interval length in which allocation is not made exceeds a certain value, the user terminal may assume that the same precoding is not performed between different resources to perform the transmitting process. In this way, since the terminal does not need to continue to hold a phase during the receiving or transmitting process in a non-continuous interval, a terminal processing load or power consumption can be decreased.

In this manner, the configurations of the continuous resource allocation type and the non-continuous resource allocation type are controlled by use of at least one of the higher layer signaling and the downlink control information to allow the data scheduling to be flexibly controlled in accordance with a communication environment. Moreover, by scheduling the data in consideration of allocations of other signals or channels and the like, the resource usage efficiency can be improved.

### (Second Aspect)

In a second aspect, L1 signaling (for example, downlink control information) is used to control the non-continuous time domain resource allocation (for example, transmission segmentation) .

In a case that the base station makes the non-continuous time domain resource allocation to data, the base station notifies the UE of a transmission segmentation of the data. The transmission segmentation (or transmission interval) of the data corresponds to a time interval in which the data is scheduled, or a time interval in which the data is allocated. Information on the transmission segmentation of the data may be notified to the UE from the base station by way of the downlink control information.

For example, in a case that the base station makes the non-continuous time domain resource allocation, the base station may notify the UE of the transmission segmentations of the all data by way of the downlink control information. The base station may notify the UE of the information on the transmission segmentation using a bitmap format. Alternatively, the base station may notify the UE of the information on the transmission segmentation in a way similar to the DL resource allocation type 1 in the existing LTE system.

For example, in a case that DL data (or PDSCH) is allocated to the non-continuous time domain resources, the base station notifies the UE of DCI for scheduling the DL data (for example, one piece of DCI) including information on a time interval in which the DL data is transmitted. The UE determines the PDSCH allocated to the non-continuous time domain resources based on the DCI to perform the receiving process.

In a case that UL data (or PUSCH) is allocated to the non-continuous time domain resources, the base station notifies the UE of DCI for scheduling the UL data (for example, one piece of DCI) including information on a time interval in which the UL data is transmitted. The UE allocates the PUSCH to the non-continuous time domain resources to control the transmission based on the DCI.

Alternatively, in a case that the base station makes the non-continuous time domain resource allocation, the base station may not notify the UE of the transmission segmentations of the all data, but may notify of only some of the transmission segmentations. Some of the transmission segmentations may be an initial transmission segmentation allocated to the non-continuous time domain resources, or several transmission segmentations including the initial transmission segmentation (and an end transmission segmentation). Other transmission segmentations not notified by way of the DCI may be configured to be determined based on a certain rule.

The UE determines a resource that is non-continuously allocated in the time direction, based on the information on some of the transmission segmentations included in the DCI and a certain rule to control at least one of the PDSCH reception and the PUSCH transmission. Note that the resource may be determined based only on the certain rule.

As the certain rule, the following three rules may be used, for example. Among rules #1 to #3, any one may be employed, a combination of two rules may be employed, or a combination of three rules may be employed. The certain rule is not limited to the rules #1 to #3.

### <Rule #1>

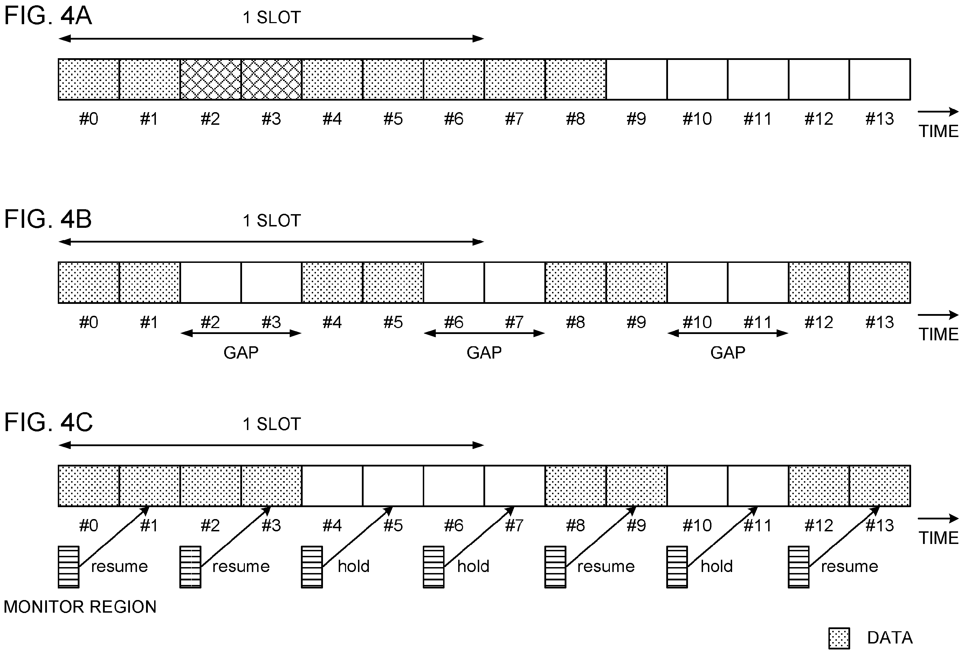

In a case that a first rule #1 is employed, the UE assumes that the non-continuous time domain resource allocation is made avoiding a certain symbol or symbol group (hereinafter, also simply referred to as a certain symbol) to control the receiving process or the transmitting process (see FIG. 4A). The certain symbol may be a time domain resource to which a cell-specific signal or channel (for example, SS/PBCH block or the like) is fixedly configured, or a time domain resource in which high interference occurs.

FIG. 4A shows a case that data is scheduled in the non-continuous time domain resources avoiding a time-domain resources to which a cell-specific signal is configured. In FIG. 4A, a case is shown in which the non-continuous time domain resource allocation is made for each symbol group constituted by two symbols. Of course, the number of symbols constituting the symbol group is not limited to two. The non-continuous time domain resource allocation may be made for each symbol. In the following description, the symbol may be substituted for the symbol group.

In FIG. 4A, a case is shown in which a synchronization signal block (also referred to as SS/PBCH block) is configured in symbol groups #2 and #3. In this case, data transmission and reception using the symbol groups #2 and #3 are restricted. For this reason, the UE assumes that data is allocated to the non-continuous time domain resources avoiding collision with the SS/PBCH block to perform at least one of the receiving process and the transmitting process.

In this manner, by allocating the data to the non-continuous time domain resources avoiding the certain symbol, the allocation of data can be flexibly controlled without collision between the data and other signals or channels.

### <Rule #2>

In a case that second rule #2 is employed, the UE assumes that a gap is configured between the transmission segmentations adjacent to each other to control the receiving process or the transmitting process (see FIG. 4B). In FIG. 4B, a case is shown in which the non-continuous time domain resource allocation is made for each symbol group constituted by two symbols. Of course, the number of symbols constituting the symbol group is not limited to two. The non-continuous time domain resource allocation may be made for each symbol. In the following description, the symbol may be substituted for the symbol group.

Parameters such as a position and a length for the gap between the data allocated to the non-continuous time domain may be fixedly configured in a specification in advance. Alternatively, the parameters for the gap may be notified from the base station to the UE by use of at least one of the higher layer signaling and the downlink control information.

In FIG. 4B, a case is shown in which a gap (here, two symbol groups) is configured between the transmission segmentations configured in symbol groups #0 and #1, and the transmission segmentations configured in symbols #4 and #5. In this manner, by providing a certain gap between the transmission segmentations, the data can be allocated to the non-continuous resources in a distributed manner based on the gap.

### <Rule #3>

In a case that third rule #3 is employed, the UE determines whether or not the allocation (or scheduling) of data is to be made based on a DL signal in a certain region to perform at least one of the receiving process and the transmitting process. For example, the UE controls holding and resuming of the receiving process or transmitting process of the data, based on at least one of information included in the DL signal (for example, bit value), a configuration of the DL signal (for example, sequence or the like), and whether or not the DL signal is detected. Note that a non-continuous time domain resource allocation procedure using the DL signal may be referred to as a hold-resume signaling.

The DL signal to be used may be at least one of UE-specific DCI, UE-common DCI, and a certain reference signal (referred to as a special RS).

The certain region corresponds to a region in which the UE monitors for the DL signal (monitor region). The monitor region may be referred to as a monitoring occasion, a monitoring window, or a monitoring opportunity.

Note that a downlink control channel (PDCCH) monitoring occasion configured for detecting the DCI may be used as the monitor region. The PDCCH monitoring occasion may be determined based on at least one of a monitoring periodicity, a monitoring offset, and a monitoring pattern which are notified from the base station.

For example, the UE may determine the monitoring occasion based on the monitoring periodicity, the monitoring offset, and the monitoring pattern which are configured from the base station through higher layer (for example, RRC signaling). The monitoring occasion may be configured for each DCI format. Of course, a monitor region may be configured separately from the PDCCH monitoring occasion.

In a case that the monitoring occasion is not configured through higher layer, a default monitoring occasion configured in advance may be used to control monitoring of a hold-resume signaling DL signal. The default monitoring occasion may be every symbol, or with a configurable minimum monitoring periodicity.

A first signaling for notifying of holding of the PDSCH receiving process and holding of the PUSCH transmitting process (also referred to as hold signaling) and a second signaling for notifying of resuming of the PDSCH receiving process and resuming of the PUSCH transmitting process (also referred to as resume signaling) may be simultaneously notified, or may be separately notified.

Alternatively, in a case that the hold-resume signaling DL signal is detected on the monitoring occasion, the resume signaling may be determined to resume at least one of the PDSCH receiving process and the PUSCH transmitting process. On the other hand, in a case that the hold-resume signaling DL signal is not detected on the monitoring occasion, the hold signaling may be determined to hold the PDSCH receiving process and the PUSCH transmitting process until a DL signal is detected in the next monitoring occasion.

Alternatively, in a case that the detected hold-resume signaling DL reference signal employs a first sequence on the monitoring occasion, the resume signaling may be determined, and in a case of employing a second sequence, the hold-resume signaling may be determined.

FIG. 4C shows an example of the hold-resume signaling. In FIG. 4C, a case is shown in which the non-continuous time domain resource allocation is made for each symbol group constituted by two symbols. Of course, the number of symbols constituting the symbol group is not limited to two. The non-continuous time domain resource allocation may be made for each symbol. In the following description, the symbol may be substituted for the symbol group.

In FIG. 4C, a case is shown in which the hold-resume signaling DL signal monitoring occasion is configured every two symbol groups (or, with a period of two symbol groups).

Here, a case is shown in which the resume signaling is notified on the monitoring occasions configured in symbol groups #0, #2, #8, and #10, and the hold signaling is notified on the monitoring occasions configured in symbol groups #4, #6, #8, and #12.

In a case that the UE receives the resume signaling in the symbol group #0, the UE resumes (or continues) at least one of the PDSCH receiving process and the PUSCH transmitting process which are scheduled by way of the DCI. The PDSCH receiving process or the PUSCH transmitting process may employ from the symbol group #0 where the resume signaling is received to the symbol group #1 before the next monitoring occasion.

Of course, a period of the PDSCH receiving process or PUSCH transmitting process performed based on the resume signaling is not limited to this. For example, the PDSCH receiving process or the PUSCH transmitting process may be performed from the symbol group #1 that is next to the symbol group #0 where the resume signaling is received.

In a case that the UE receives the resume signaling in the symbol group #2, the UE continues at least one of the PDSCH receiving process and the PUSCH transmitting process which are scheduled by way of the DCI.

In a case that the UE receives the hold signaling in the symbol group #4, the UE holds the PDSCH receiving process and the PUSCH transmitting process which are scheduled by way of the DCI. In this case, the UE may hold the PDSCH receiving process and the PUSCH transmitting process until a resume signaling is detected next time.

In this manner, by controlling employing of the PDSCH receiving process and the PUSCH transmitting process by use of the DL signal configured on the monitoring occasion, the non-continuous time domain resource allocation can be flexibly controlled. This allows the data scheduling to be flexibly controlled and the resource utilization efficiency to be improved.

### (Radio Communication System)

Hereinafter, a structure of a radio communication system according to one embodiment of the present invention will be described. In this radio communication system, the radio communication method according to each embodiment of the present invention described above may be used alone or may be used in combination for communication.

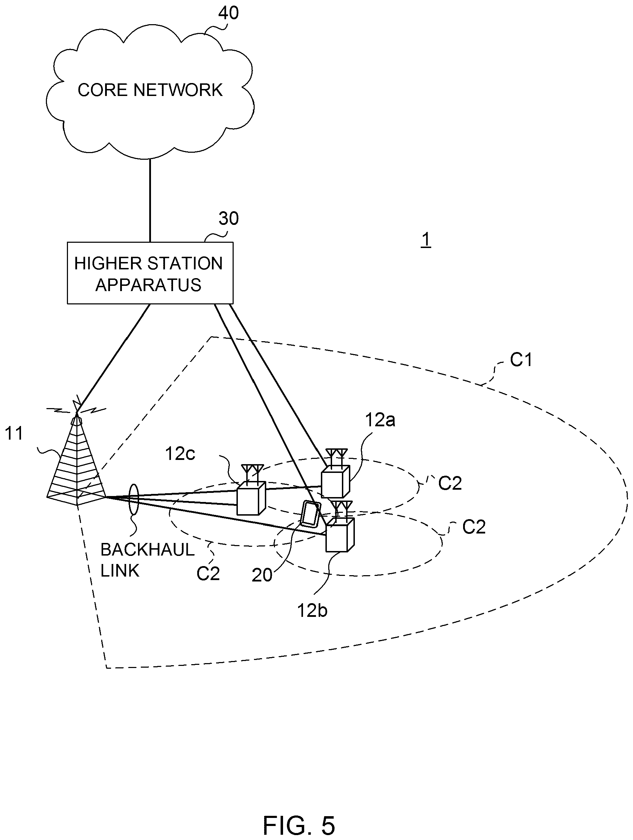

FIG. 5 is a diagram to show an example of a schematic structure of the radio communication system according to one embodiment of the present invention. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the radio base station 11 and the radio base stations 12. It is assumed that the user terminals 20 use the macro cell C1 and the small cells C2 at the same time by means of CA or DC. The user terminals 20 may adopt CA or DC by using a plurality of cells (CCs) (for example, five or less CCs, or six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Delivery confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. In addition, radio quality information (CQI (Channel Quality Indicator)) of the downlink, delivery confirmation information, a scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### (Radio Base Station)

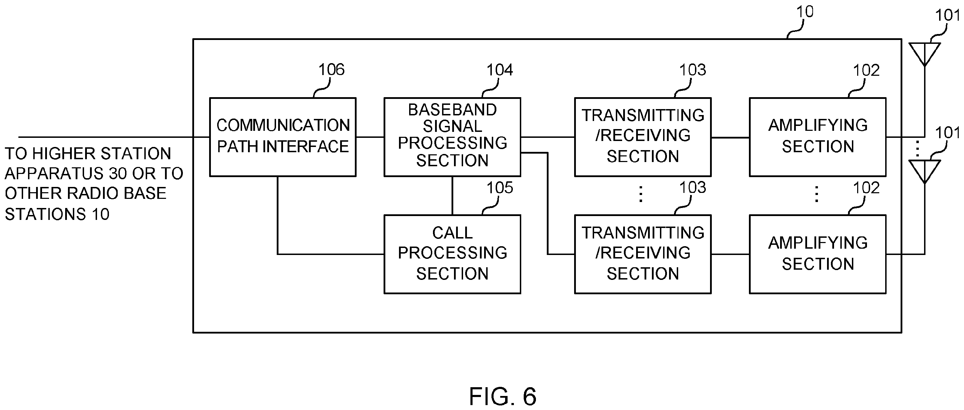

FIG. 6 is a diagram to show an example of an overall structure of the radio base station according to one embodiment of the present invention. A radio base station 10 includes a plurality of transmitting/receiving antennas 101, amplifying sections 102, transmitting/receiving sections 103, a baseband signal processing section 104, a call processing section 105 and a communication path interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing and so on) for communication channels, manages the state of the radio base station 10, manages the radio resources and so on.

The communication path interface 106 transmits and/or receives signals to and/or from the higher station apparatus 30 via a certain interface. The communication path interface 106 may transmit and/or receive signals (backhaul signaling) with other radio base stations 10 via an inter-base station interface (for example, an optical fiber in compliance with the CPRI (Common Public Radio Interface) and an X2 interface).

The transmitting/receiving sections 103 transmit a physical shared channel (for example, PDSCH) scheduled in units of symbol or in units of symbol group. Alternatively, the transmitting/receiving sections 103 receive a physical shared channel (for example, PUSCH) scheduled in units of symbol or in units of symbol group. The transmitting/receiving sections 103 may notify the allocation type for the time direction of the physical shared channel. The transmitting/receiving sections 103 may notify the UE of the physical shared channel allocation resource (for example, SLIV).

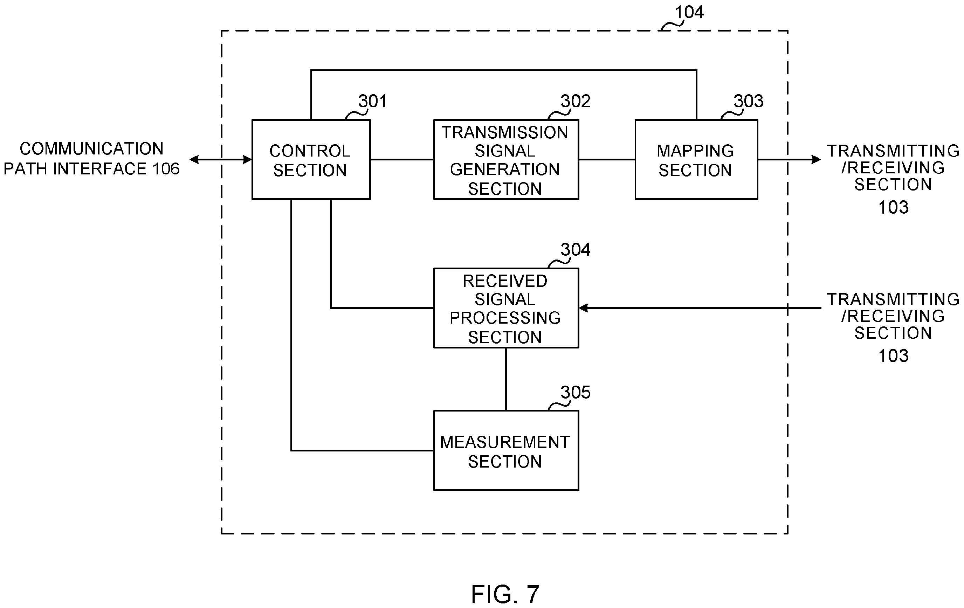

FIG. 7 is a diagram to show an example of a functional structure of the radio base station according to one embodiment of the present invention. Note that, the present example primarily shows functional blocks that pertain to characteristic parts of the present embodiment, and it is assumed that the radio base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit or control apparatus that can be described based on general understanding of the technical field to which the present invention pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls scheduling (for example, resource allocation) of system information, a downlink data signal (for example, a signal transmitted on a PDSCH), and a downlink control signal (for example, a signal transmitted on a PDCCH and/or an EPDCCH, acknowledgment information, and so on). Based on the results of determining necessity or not of retransmission control to the uplink data signal, or the like, the control section 301 controls generation of a downlink control signal, a downlink data signal, and so on. The control section 301 controls the scheduling of a synchronization signal (for example, a PSS (Primary Synchronization Signal)/an SSS (Secondary Synchronization Signal)), a downlink reference signal (for example, a CRS, a CSI-RS, a DMRS), and so on.

The control section 301 controls scheduling of an uplink data signal (for example, a signal transmitted on a PUSCH), an uplink control signal (for example, a signal transmitted on a PUCCH and/or a PUSCH, delivery confirmation information, and so on), a random access preamble (for example, a signal transmitted on a PRACH), an uplink reference signal, and so on.

The control section 301 controls to select the allocation type for the time direction of the physical shared channel and configure the selected type for the UE. The control section 301 may control the allocation for at least one of the PDSCH and the PUSCH based on the allocation type for the time direction employed for the physical shared channel.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present invention pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present invention pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present invention pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

### (User Terminal)

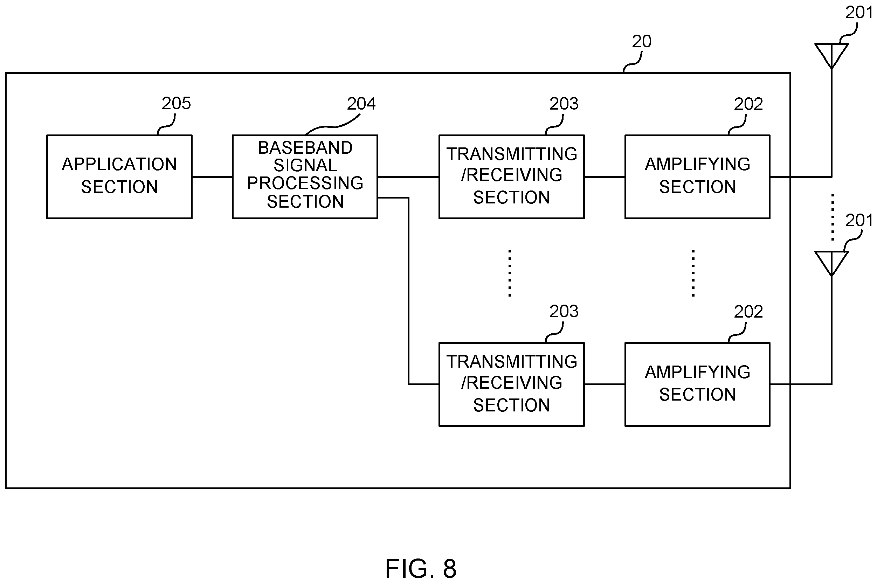

FIG. 8 is a diagram to show an example of an overall structure of a user terminal according to one embodiment of the present invention. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present invention pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 receive a physical shared channel (for example, PDSCH) scheduled in units of symbol or in units of symbol group. Alternatively, the transmitting/receiving sections 203 transmit a physical shared channel (for example, PUSCH) scheduled in units of symbol or in units of symbol group. The transmitting/receiving sections 203 may notify the allocation type for the time direction of the physical shared channel. The transmitting/receiving sections 203 may receive the physical shared channel allocation resource (for example, SLIV).

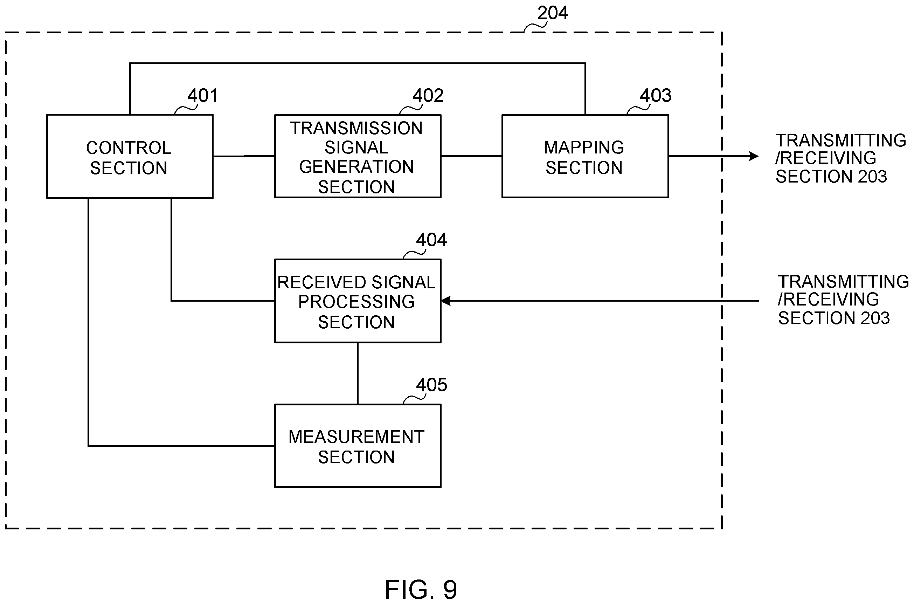

FIG. 9 is a diagram to show an example of a functional structure of a user terminal according to one embodiment of the present invention. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present invention pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

The control section 401 controls reception of a physical shared channel (for example, PDSCH) based on the allocation type for the time direction of the physical shared channel notified by use of at least one of the downlink control information and the higher layer signaling. Alternatively, the control section 401 controls transmission of a physical shared channel (for example, PUSCH) based on the allocation type for the time direction of the physical shared channel notified by use of at least one of the downlink control information and the higher layer signaling.

The allocation type may include a type that the physical shared channel is allocated to the continuous time domain resources, and a type that the physical shared channel is allocated to the non-continuous time domain resources.

In a case that the physical shared channel is allocated to the non-continuous time domain resources, the control section 401 may determine at least some of transmission segmentations of the physical shared channel based on the downlink control information. In the case that the physical shared channel is allocated to the non-continuous time domain resources, the control section 401 may determine the transmission segmentation of the physical shared channel excluding a certain region to which a certain signal is allocated.

In the case that the physical shared channel is allocated to the non-continuous time domain resources, the control section 401 may control holing and resuming of reception of the physical shared channel, based on a certain DL signal detected on a certain monitoring occasion, or whether or not a certain DL signal is detected on a certain monitoring occasion.

The control section 401 may control at least one of the PDSCH receiving process and the PUSCH transmitting process based on the SLIV notified from the base station and the allocation type for the time direction of the physical shared channel.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present invention pertains.

For example, the transmission signal generation section 402 generates an uplink control signal about delivery confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can be constituted with a signal processor, a signal processing circuit or signal processing apparatus that can be described based on general understanding of the technical field to which the present invention pertains. The received signal processing section 404 can constitute the receiving section according to the present invention.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit or measurement apparatus that can be described based on general understanding of the technical field to which the present invention pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

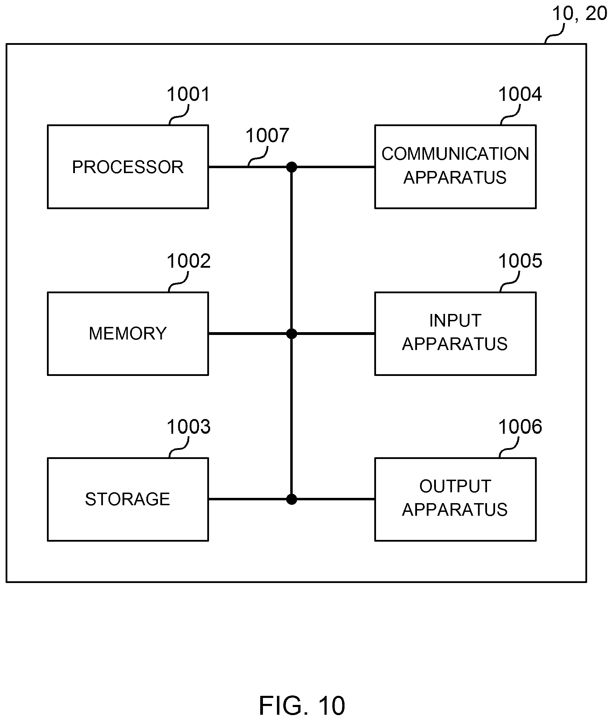

For example, a radio base station, a user terminal, and so on according to one embodiment of the present invention may function as a computer that executes the processes of the radio communication method of the present invention. FIG. 10 is a diagram to show an example of a hardware structure of the radio base station and the user terminal according to one embodiment of the present invention. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control reading and/or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present invention.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via a wired and/or wireless network, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in this specification and/or the terminology that is needed to understand this specification may be replaced by other terms that convey the same or similar meanings. For example, "channels" and/or "symbols" may be "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks, and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "common TTI" (TTI in LTE Rel. 8 to Rel. 12), a "normal TTI", a "long TTI," a "common subframe," a "normal subframe," a "long subframe" and so on. A TTI that is shorter than a common TTI may be referred to as a "shortened TTI," a "short TTI," a "partial or fractional TTI," a "shortened subframe," a "short subframe," a "mini-slot," a "sub-slot" and so on.

Note that a long TTI (for example, a common TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to certain values, or may be represented in another corresponding information. For example, radio resources may be specified by certain indices.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers, and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" used in this specification can be used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up, (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions and/or (both visible and invisible) optical regions, or the like.

In this specification, the phrase "A and B are different" may mean that "A and B are different from each other." The terms "separate," "be coupled" and so on may be interpreted similarly.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described in this specification. The present invention can be implemented with various corrections and in various modifications, without departing from the spirit and scope of the present invention defined by the recitations of claims. Consequently, the description in this specification is provided only for the purpose of explaining examples, and should by no means be construed to limit the present invention in any way.

## Claims

1. A user terminal comprising:
a receiving section that receives a physical shared channel scheduled in units of symbol or in units of symbol group; and
a control section that controls reception of the physical shared channel, based on an allocation type for a time direction of the physical shared channel notified by use of at least one of downlink control information and higher layer signaling.

2. The user terminal according to claim 1, wherein
the allocation type includes a type that the physical shared channel is allocated to a continuous time domain resource, and a type that the physical shared channel is allocated to a non-continuous time domain resource.

3. The user terminal according to claim 1 or 2, wherein
in a case that the physical shared channel is allocated to the non-continuous time domain resource, the control section determines at least some of transmission segmentations of the physical shared channel, based on the downlink control information.

4. The user terminal according to any one of claims 1 to 3, wherein
in the case that the physical shared channel is allocated to the non-continuous time domain resource, the control section determines the transmission segmentation of the physical shared channel excluding a certain region to which a certain signal is allocated.

5. The user terminal according to any one of claims 1 to 4, wherein
in the case that the physical shared channel is allocated to the non-continuous time domain resource, the control section controls holing and resuming of the reception of the physical shared channel, based on a certain DL signal detected on a certain monitoring occasion, or whether or not a certain DL signal is detected on a certain monitoring occasion.

6. A radio communication method for a user terminal, the radio communication method comprising:
receiving a physical shared channel scheduled in units of symbol or in units of symbol group; and
controlling reception of the physical shared channel, based on an allocation type for a time direction of the physical shared channel notified by use of at least one of downlink control information and higher layer signaling.
